(19) Europäisches Patentamt
European Patent Office
Office européen des brevets

(11) EP 0 806 685 A1

(12) **DEMANDE DE BREVET EUROPEEN**

(43) Date de publication:
**12.11.1997 Bulletin 1997/46**

(51) Int Cl.[6]: **G02B 6/30**, G02B 6/12

(21) Numéro de dépôt: **97401030.8**

(22) Date de dépôt: **07.05.1997**

(84) Etats contractants désignés:
**CH DE GB LI NL**

(30) Priorité: **10.05.1996 FR 9605840**

(71) Demandeur: **COMMISSARIAT A L'ENERGIE ATOMIQUE**
**75015 Paris (FR)**

(72) Inventeurs:
- **Labeye, Pierre**
  **38000 Grenoble (FR)**
- **Pouteau, Patrick**
  **38340 Voreppe (FR)**

(74) Mandataire: **Moutard, Pascal Jean**
**c/o Brevatome,**
**25, rue de Ponthieu**
**75008 Paris (FR)**

(54) **Filtre en optique intégrée**

(57) L'invention concerne un dispositif d'optique intégrée, comportant un microguide optique (44) d'indice $n_0$ compris entre deux milieux d'indice de réfraction respectifs $n_1$ et $n'_1$, tels que $n_1<n_0$ et $n'_1<n_0$, et des moyens de filtrage (46, 48) constitués d'au moins un élément réflecteur disposé sur au moins un côté du microguide, les éléments réflecteurs comportant au moins un élément gravé dans les couches d'indice $n_1$ et/ou $n'_1$ et/ou $n_0$.

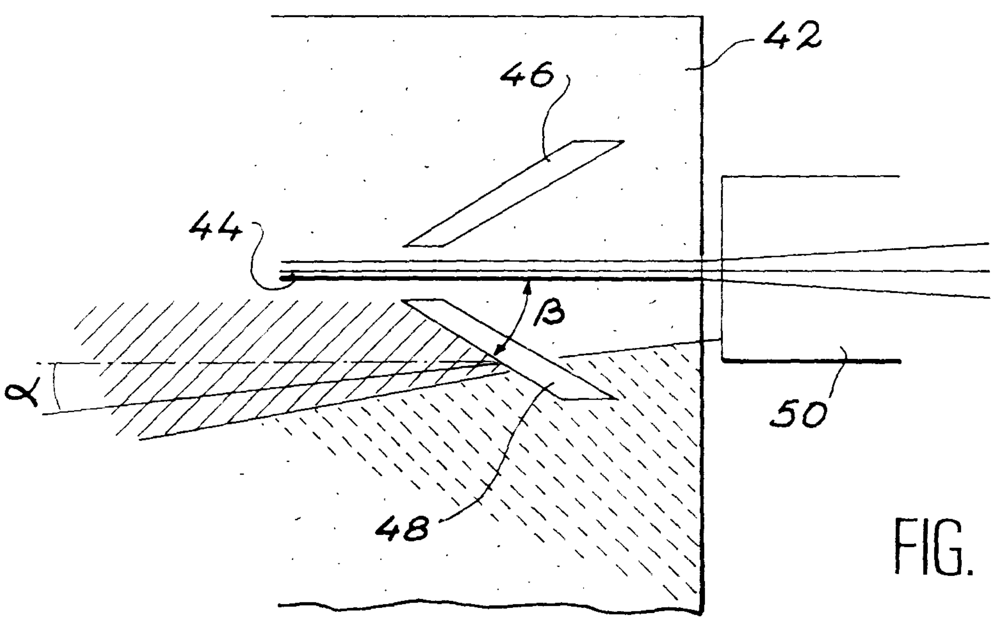


FIG. 4

EP 0 806 685 A1

## Description

### Domaine technique et art antérieur

L'invention concerne un dispositif de filtrage de lumière parasite en optique intégrée.

Cette invention s'applique à tout dispositif d'optique intégrée, en particulier dans le domaine des microsystèmes optiques, par exemple pour les télécommunications, ou dans le domaine des microcapteurs optiques intégrés.

Un tel dispositif comporte un microguide optique. Celui-ci est défini par un coeur, appelé "coeur du microguide", compris entre deux milieux dont les indices-de réfraction respectifs sont inférieurs à l'indice de réfraction du coeur du microguide.

Par définition, une telle structure de guidage est donc une structure résultant de la superposition de trois milieux, le milieu intermédiaire (le coeur) présentant un indice de réfraction supérieur à celui des deux autres. Un microguide est une structure de guidage particulière, dont l'un au moins des trois milieux constituant la structure de guidage est limité latéralement (par exemple par gravure) de façon à assurer un confinement latéral de la lumière.

Un dispositif d'optique intégrée, comportant un microguide, est représenté schématiquement, en vue de dessus, sur la figure 1. Le dispositif est désigné globalement par la référence 2 et comporte un microguide 4 prolongé par deux microguides 6 et 8. Le dispositif illustré comporte en outre des connexions d'entrée 10 et de sortie 12, 14.

La connexion d'entrée peut être reliée à une, ou plusieurs, source(s) lumineuse(s) comportant éventuellement des moyens de focalisation, ou encore, comme sur la figure 1, à une fibre optique 16 qui permet de réaliser une liaison souple entre une source lumineuse et le dispositif 2. De même, en sortie, la lumière peut être couplée à des fibres optiques 18, 20, ou encore à des détecteurs, c'est-à-dire, de manière générale, à des moyens de collection de la lumière. La connexion entre les sources, ou les fibres, ou les moyens de collection se fait en positionnant ces divers éléments en face des microguides d'entrée ou de sortie. Différentes méthodes ont été proposées pour réaliser de telles connexions, l'une de ces méthodes étant décrite dans le document FR-2 659 148.

Cependant, l'alignement est toujours fait avec une certaine tolérance, et n'est donc pas parfait : il y a donc, notamment à l'entrée du dispositif d'optique intégrée, toujours un peu de lumière perdue. Ceci est représenté sur la figure 1, où des rayons 22, 24 représentent la lumière parasite qui s'échappe de la fibre d'entrée 16 dans la structure intégrée 2. Cette lumière parasite est, dans la plupart des cas, confinée dans la structure guidante, et elle s'y propage. Elle subit en général des réflexions, et va interférer avec les signaux utiles prélevés par les moyens de collection (fibres 18 et 20 sur la figure 1), en sortie des microguides 6, 8. Cet effet est loin d'être négligeable, et est en fait bien plus important en optique intégrée qu'en optique classique, car la lumière y est totalement, ou en partie, confinée dans le plan de la structure guidante du dispositif. Il n'existe pas vraiment de méthode existante permettant de s'affranchir de cette lumière parasite, qui résulte en une dégradation de la qualité de fonctionnement du dispositif, notamment en terme de rapport signal/bruit dans le cas de capteurs optiques intégrés.

### Exposé de l'invention

L'invention a pour objet un dispositif d'optique intégrée, comportant un microguide optique d'indice $n_0$ compris entre deux couches d'indice de réfraction respectif $n_1$ et $n'_1$, tels que $n_1<n_0$ et $n'_1<n_0$, et des moyens de filtrage constitués d'au moins un élément réflecteur disposé sur au moins un côté du microguide, les éléments réflecteurs comportant au moins un élément gravé dans les couches d'indice $n_1$ et/ou $n'_1$ et/ou $n_0$.

Ces moyens de filtrage sont aptes à filtrer, par réflexion, la lumière parasite se propageant dans le dispositif au voisinage du microguide.

Plus précisément, les couches d'indice $n_1$ et $n'_1$ définissent chacune un plan de part et d'autre du microguide. Les moyens de filtrage, gravés dans les couches d'indices $n_1$ et/ou $n'_1$ et/ou $n_0$ permettent de filtrer de la lumière parasite se propageant "horizontalement", c'est-à-dire dans le plan du microguide et/ou des couches d'indice $n_1$ et $n'_1$.

Les éléments réflecteurs sont réalisés dans les milieux d'indice de réfraction $n_1$ et/ou $n'_1$ et/ou $n_0$ et peuvent donc être réalisés lors de l'élaboration de la structure d'optique intégrée. En outre, de tels éléments réflecteurs peuvent être avantageusement placés au voisinage de connexions de sortie du dispositif d'optique intégrée, de manière à réfléchir la lumière susceptible de venir interférer avec d'éventuels moyens de récupération ou de collection de la lumière. Cependant de tels éléments peuvent également être placés en entrée du dispositif ou en tout autre endroit nécessitant un filtrage de lumière parasite.

Des éléments réflecteurs peuvent être disposés de part et d'autre du microguide, assurant ainsi un filtrage de la lumière des deux côtés du microguide.

Une face du ou des élément(s) réflecteur(s) peut être recouverte d'une couche réfléchissante, réalisée en un matériau comportant de l'or ou du chrome ou de l'aluminium ou du platine, ou de l'argent, ou du cuivre, ou un matériau diélectrique.

Afin d'améliorer l'efficacité du filtrage, le dispositif peut comporter au moins deux éléments réflecteurs, disposés

l'un derrière l'autre, par exemple suivant une direction parallèle au microguide optique d'indice $n_0$.

L'élément, ou les éléments, réflecteurs peuvent être orientés perpendiculairement à la direction du microguide. Ils peuvent être également inclinés par rapport à l'axe du microguide.

En particulier, lorsque le dispositif comporte en outre un élément de collection de la lumière véhiculée par le microguide, cet élément de collection ayant un angle d'acceptance $\alpha_c$, l'élément réflecteur peut être avantageusement incliné, par rapport à l'axe du microguide, d'un angle

$$\beta < \frac{\pi}{2} - \alpha_C - \arcsin\left(\frac{n_3}{n_2}\right),$$

où $n_3$ est l'indice du milieu formant le réflecteur et $n_2$ l'indice effectif de la structure environnante au microguide, où est réalisé le réflecteur.

Selon un exemple de réalisation, l'élément réflecteur contient de l'air, d'indice 1.

Si l'élément de collection est une fibre optique, ayant un coeur d'indice $n_4$, et une gaine d'indice $n_5$, on a :

$$\alpha_C = \arcsin\left(\sqrt{n_4^2 - n_5^2}\right).$$

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 (déjà décrite) représente schématiquement, en vue de dessus, une structure guidante d'un dispositif de l'art antérieur,
- la figure 2 représente une structure multicouche permettant de réaliser une structure intégrée utilisable dans un dispositif selon l'invention.
- Les figures 3A et 3B représentent des exemples de structures guidantes, en coupe,
- la figure 4 représente un mode de réalisation de l'invention,
- la figure 5 illustre la notion de cône d'acceptance pour un détecteur,
- la figure 6 est une variante du premier mode de réalisation de l'invention,
- les figures 7A et 7B illustrant un exemple d'un dispositif selon le premier mode de réalisation de l'invention,
- les figures 8A et 8B représentent un autre mode de réalisation de l'invention,
- la figure 9 représente une sortie de tricoupleur, munie de réflecteurs conformément au second mode de réalisation de l'invention.

Description détaillée de modes de réalisation de l'invention

Un dispositif d'optique intégrée selon l'invention comporte une structure de guidage optique intégrée formée à partir d'une structure illustrée sur la figure 2. Celle-ci comprend un substrat 30, par exemple en silicium, une première couche de confinement 32, par exemple en silice $SiO_2$ d'indice 1,45, une couche guidante 34, par exemple en $Si_3N_4$ d'indice 1,99 et une seconde couche de confinement 36, par exemple en $SiO_2$ d'indice 1,47 (ces indices sont donnés pour $\lambda$=0,78 μm). L'épaisseur des première et troisième couches peut être par exemple respectivement d'environ 2 et 1 μm. D'une manière générale, leur épaisseur est comprise entre 1 μm (ou quelques μm, par exemple 2 ou 3 ou 5 μm), et plusieurs μm (ou quelques dizaines de μm, par exemple 10 μm ou 20 μm ou 30 μm ou 50 μm). Celle de la couche intermédiaire est par exemple comprise entre 100 et 200 nm et vaut par exemple 165 nm.

En fait, le dispositif selon l'invention peut être réalisé sur n'importe quel type de structure optique intégrée. En particulier, il peut être réalisé dans du verre, dans du niobate de lithium, dans des structures multicouches semi-conductrices telles que des structures III-V ou II-VI.

Par exemple, on peut utiliser l'une des structures suivantes :

- verre/verre dopé par échange d'ions/$SiO_2$,
- $LiNbO_3$/$LiNbO_3$ dopé par diffusion de titane/$LiNbO_3$,

dans ces deux premiers cas, la première couche de confinement ou couche tampon est confondue avec le substrat,

- $Si/SiO_2/Si_3N_4/SiO_2$,
- $Si/SiO_2/SiO_xN_y/SiO_2$ avec $0 \leq x \leq 2$ et $0 \leq y \leq 4$,
- $Si/SiO_2/SiO_2$ dopé/$SiO_2$, les dopants de la couche guide étant tels que celle-ci a un indice de réfraction supérieur à celui des couches adjacentes, comme par exemple le phosphore, le germanium, le titane ou l'azote.

Il est en outre possible de remplacer la couche guide en $Si_3N_4$ par de l'alumine et/ou de doper la silice utilisée comme couche tampon et comme couche supérieure de la structure guidante par un dopant diminuant l'indice de réfraction de la silice tel que le fluor ou encore par un dopant augmentant l'indice de réfraction de la silice. Bien entendu, la couche guide doit toujours présenter un indice de réfraction supérieur à celui de la couche tampon et à celui de la couche supérieure associées.

Sur une structure de guidage telle que celle de la figure 2, un microguide est réalisé, par exemple par gravure totale ou partielle de la couche supérieure de confinement 36, ou de la couche guide 34, selon des techniques classiques, par exemple par photolithographie par masquage.

Une structure obtenue par gravure de la couche guidante est représentée schématiquement, en coupe, sur la figure 3A. Sur cette figure, on retrouve la couche de substrat 30 et la première couche de confinement 32 (par exemple respectivement en silicium, et en silice dopée au phosphore à 3%). La couche de guidage 34 a été gravée de façon à dégager un microguide 38, dont l'axe s'étend perpendiculairement au plan de la figure 3A. Ce microguide 38 est par exemple en silice dopée au phosphore, à 6%. La couche supérieure de confinement 36 est par exemple en silice, dopée au phosphore à 3%. L'indice $n_0$ du microguide 38 est supérieur aux indices $n_1$ et $n'_1$ des couches 32 et 36 et, par conséquent, tout rayonnement introduit dans ce microguide se propage selon l'axe de ce dernier.

Une structure obtenue par gravure de la couche supérieure de confinement est illustrée sur la figure 3B. On y retrouve le substrat 30 (par exemple en silicium), la première couche de confinement 32 (par exemple en SiO2, la couche de guidage 34 (par exemple en $Si_3N_4$). Une couche 40 (par exemple en $SiO_2$) est obtenue par gravure de la couche supérieure de confinement 36. Le signal est localisé dans le microguide défini par la partie de la couche de guidage 34 située sous la zone de confinement 40.

Un procédé de réalisation d'une des structures décrites ci-dessus met en oeuvre les techniques usuelles de dépôt des couches. Parmi celles-ci, on peut citer le dépôt chimique en phase vapeur assisté par plasma, notamment quand il s'agit de couches en silice $SiO_2$ (technique connue en terminologie anglo-saxonne sous le signe PECVD), ou d'autres procédés de dépôts chimiques en phase vapeur telle que l'hydrolyse à la flamme et le dépôt chimique en phase vapeur à basse pression, notamment lorsqu'il s'agit de couches de nitrure de silicium $Si_3N_4$ (technologie désignée en terminologie anglo-saxonne par le sigle LPCVD).

Par ailleurs, lorsque ces couches ont le même constituant de base, par exemple la silice, pour avoir une différence d'indice de réfraction, on effectue un dopage d'une, de plusieurs, ou de toutes ces couches par des méthodes connues. Parmi celles-ci on peut citer l'utilisation de réactions chimiques en présence de gaz réactifs, l'implantation ionique et la diffusion d'ions ou d'atomes divers.

Dans une structure telle que l'une de celles qui viennent d'être décrite, la propagation de la lumière se fait à une certaine vitesse effective $V_e$. On définit l'indice effectif ne de la structure par :

$$n_e = \frac{C}{V_e},$$

où C est la vitesse d'une onde plane dans le vide.

Dans le cas des structures qui ont été décrites ci-dessus, comportant une couche guidante d'indice $n_0$ comprise entre deux couches d'indice $n_1$ et $n'_1$ (ces dernières étant supposées très épaisses par rapport à la couche d'indice $n_0$), l'équation permettant de trouver ne est :

$$\frac{2\pi d}{\lambda}\sqrt{n_0^2 - n_e^2} - \text{Arc tan}\,\frac{\sqrt{n_e^2 - n_1^2}}{\sqrt{n_0^2 - n_e^2}} - \text{Arc tan}\,\frac{\sqrt{n_e^2 - n'^2_1}}{\sqrt{n_0^2 - n_e^2}} = m\pi$$

où $\lambda$ est la longueur d'onde de la lumière, d l'épaisseur de la couche d'indice $n_0$ et m un nombre entier. Généralement, dans les guides optiques intégrés, on s'arrange pour que cette équation n'admette qu'une seule solution, pour m=0. Le paramètre obtenu ne est une sorte d'indice moyen des trois couches, vu par la lumière se propageant dans le plan.

Un rayon lumineux, notamment un rayon parasite, se propageant dans cette structure d'indice ne et arrivant sur

une interface avec un milieu d'indice $n'_e$ sera totalement réfléchi à cette interface lorsque l'angle défini entre la direction du rayon et la normale au plan de réflexion du réflecteur sera supérieur à

$$\alpha_0 = \mathrm{Arc\,sin}\left(\frac{n'_e}{n_e}\right).$$

Un dispositif tel que celui décrit ci-dessus en liaison avec la figure 1 présente des fibres de sortie 18, 20 constituées d'un coeur d'indice n4 entouré d'une structure de gainage d'indice $n_5$. Une telle fibre optique présente donc une ouverture numérique, ou cône d'acceptance de demi-angle

$$\alpha_C = \mathrm{Arc\,sin}\left(\sqrt{n_4^2 - n_5^2}\right).$$

Aucun rayon, incident sur la face d'entrée de la fibre optique, avec un angle d'incidence supérieur à ac (demi-angle au sommet du cône d'acceptance) n'est guidé dans la fibre.

Dans un dispositif d'optique intégrée 42, comportant un microguide 44, l'invention propose donc, comme illustré sur la figure 4, de réaliser un ou plusieurs réflecteurs 46, 48, d'indice n2, ayant une interface faisant un angle $\beta$ avec l'axe du microguide tel que :

$$\beta < \frac{\pi}{2} - \alpha_C - \mathrm{Arc\,sin}\left(\frac{n_2}{n_e}\right),$$

où $n_e$ est l'indice effectif de la structure environnante au microguide.

Ainsi, tout rayon arrivant avec un angle $\alpha$ inférieur à

$$\frac{\pi}{2} - \beta - \mathrm{Arc\,sin}\left(\frac{n_2}{n_e}\right)$$

sera totalement réfléchi par les éléments de filtrage 46, 48. Tout rayon arrivant avec un angle $\alpha$ supérieur sera transmis par le réflecteur mais ne pourra de toute façon pas être capté par la fibre de sortie 50, car ce rayon sera en dehors de son angle d'acceptance (l'angle a est supérieur à l'ouverture numérique de la fibre). L'angle $\alpha$ est défini par l'angle entre la direction du rayon et l'axe optique du microguide (voir figure 4).

Dans le schéma de la figure 4, deux éléments de filtrage 46, 48 ont été représentés de part et d'autre du microguide 44. Certaines applications peuvent ne nécessiter qu'un seul élément de filtrage, fonctionnant sur le même principe. Deux éléments de filtrage, disposés symétriquement, permettent de filtrer la lumière de manière symétrique de part et d'autre du guide.

D'une manière générale, tout dispositif optique, ou détecteur, présente un angle d'acceptance $\alpha_c$. La figure 5 représente un détecteur 52 situé dans un boîtier 54. On voit clairement qu'il existe un angle $\alpha_c$ tel que :

- un rayon incident ayant un angle a strictement supérieur à $\alpha_c$, n'est pas capté par le détecteur 52,
- un rayon incident ayant un angle a inférieur à $\alpha_c$ est capté par le détecteur 52.

D'une manière générale, quel que soit le dispositif optique considéré, il existe un angle d'acceptance défini par la géométrie du montage dans lequel ce dispositif est incorporé.

Si, par conséquent, la fibre optique 50 de la figure 4 est remplacée par un dispositif optique quelconque, présentant un angle d'acceptance $\alpha_c$, les moyens de filtrage 46, 48 seront disposés de manière à présenter une interface faisant un angle $\beta$ avec l'axe du microguide tel que :

$$\beta < \frac{\pi}{2} - \alpha_C - \mathrm{Arc\,sin}\left(\frac{n_2}{n_e}\right),$$

où $n_2$ et ne ont la même signification que celle déjà donnée ci-dessus. Dans ces conditions, aucun rayon parasite, arrivant en incidence sur l'un des éléments de filtrage 46, 48 avec un angle supérieur à

$$\frac{\pi}{2} - \beta - \mathrm{Arc\,sin}\left(\frac{n_2}{n_e}\right),$$

sera transmis mais ne rentrera dans le dispositif optique situé en sortie, tandis que tout rayon parasite arrivant avec un angle inférieur à

$$\frac{\pi}{2} - \beta - \mathrm{Arc\,sin}\left(\frac{n_2}{n_e}\right)$$

sera totalement réfléchi par les éléments de filtrage 46, 48.

L'invention a été décrite avec des réflecteurs situés à proximité d'une sortie de la structure en optique intégrée. Comme illustré sur la figure 6, des réflecteurs 56, 57 peuvent également être disposés à l'entrée d'un microguide 44, situé par exemple en face d'une fibre optique d'entrée 51. Dans ce cas, les réflecteurs définissent des zones 58, 60 exemptes de lumière parasite. En effet, les rayons 62, 64 se propageant longitudinalement, de part et d'autre du microguide 44 sont réfléchis à l'interface avec les éléments de filtrage 56, 57. On peut définir un angle d'émittance ac, ou demi-angle au sommet du cône d'émittance (cône dans lequel la fibre optique 51 émet du rayonnement); L'angle d'inclinaison β de l'interface, par rapport à l'axe du microguide, est de préférence choisi tel que

$$\beta < \frac{\pi}{2} + \alpha_C - \mathrm{Arc\,sin}\left(\frac{n_2}{n_e}\right).$$

Cette variante peut s'appliquer quel que soit le dispositif optique en entrée du microguide 44 : fibre optique, source de rayonnement ou autres, un cône d'émittance avec demi-angle $\alpha_c$ au sommet pouvant être défini.

Les moyens de filtrage décrits dans le cadre du premier mode de réalisation de l'invention permettent de réfléchir totalement la lumière parasite dont les rayons font un angle faible avec l'axe du microguide autour duquel ils sont positionnés, et qui sont le plus susceptibles d'interférer avec le signal utile. Ils améliorent donc grandement le fonctionnement optique du dispositif. En particulier, dans le cas d'un capteur, ils permettent d'améliorer grandement le rapport signal/bruit, et donc de réaliser un capteur plus précis et plus sensible.

Un exemple de réalisation d'un dispositif incorporant des éléments de filtrage selon le premier mode de réalisation de l'invention va être décrit en liaison avec les figures 7A et 7B. La figure 7A représente, en coupe, la structure du microguide 38 et de ses couches guidantes inférieure et supérieure 32, 36. Les trois couches sont en silice dopée au phosphore, les deux couches de guidage 32, 36 ayant un indice d'environ 1,47, tandis que le microguide 38 a un indice d'environ 1,48. La couche 32 a une épaisseur $h_1$ supérieure à 8 μm, la couche 36 a une épaisseur $h_2$ supérieure à 6 μm, le microguide 38 atteint une hauteur $h_3$ d'environ 2 μm pour une largeur 13 de 2,5 μm. La hauteur de la structure optique est donc de l'ordre de 15 μm. Une telle structure a un indice effectif $n_e$ à peu près égal à 1,4755.

Le couplage de sortie de la structure optique guidante peut être effectué avec des fibres optiques multimodes. Il est alors possible de réaliser un bon couplage en retenant la méthode proposée dans le document FR-2 659 148, qui consiste à graver entièrement la structure optique, puis à graver de manière isotrope le silicium afin de créer des trous de positionnement des fibres optiques. La figure 7B est une vue de dessus de la zone de couplage de sortie du microguide 38. Une fibre optique 106 est positionnée dans un trou 108 de positionnement, gravé dans le silicium. Des réflecteurs 110, 112 sont disposés de part et d'autre du microguide 38, avec une direction conforme à l'enseignement de la présente invention. Les réflecteurs peuvent être réalisés en même temps que le trou de connexion 108, en gravant simplement, dans la structure optique, des rectangles de part et d'autre du microguide de sortie 38. Après gravure, il est possible de laisser les réflecteurs creux : ils ont alors un indice égal à 1. La fibre de sortie est en silice dopée et a

donc un indice de coeur n4 sensiblement égal à 1,46 et un indice de gaine $n_5$ sensiblement égal à 1,45. Son ouverture numérique est alors :

$$\alpha_C = \mathrm{Arc\,sin}\left(\sqrt{n_4^2 - n_5^2}\right) \simeq 9,8°.$$

Les réflecteurs sont positionnés avec un angle β tel que :

$$\beta < \frac{\pi}{2} - \alpha_C - \mathrm{Arc\,sin}\left(\frac{n2}{n_e}\right) \simeq 90° - 9,8° - \mathrm{Arc\,sin}\left(\frac{1}{1,4755}\right) \simeq 37,5°.$$

On peut prendre, par exemple, β=30°.

Un autre mode de réalisation de l'invention va être décrit en liaison avec les figures 8A et 8B. La figure 8A représente un dispositif d'optique intégrée désigné globalement par la référence 70 et comportant un microguide 72. Un élément réflecteur 74, gravé dans les couches environnant le microguide 72 permet de filtrer la lumière parasite se propageant selon une direction 76. Un second réflecteur 78 peut être prévu, de l'autre côté du guide 72. Afin d'accroître l'efficacité du filtrage, des réflecteurs supplémentaires 82, 80 peuvent être disposés "en série" avec les réflecteurs 74, 78. En fait, ces réflecteurs sont disposés derrière les premiers réflecteurs 74, 78 suivant une direction parallèle à la direction du microguide 72.

Avantageusement, une couche réflectrice est déposée sur une ou plusieurs des faces d'un ou de plusieurs réflecteurs 74, 78, 80, 82. La figure 8B représente une vue en coupe II-II du réflecteur 74 de la structure en optique intégrée 70. Celle-ci présente, conformément à ce qui a été décrit ci-dessus en liaison avec la figure 2, un substrat 30 sur lequel sont successivement déposées une couche inférieure de guidage 32, une couche guide (non représentée car gravée dans la coupe II-II de la figure 8B), une couche supérieure de guidage 36. Un dépôt réfléchissant 84 est réalisé sur la face d'entrée du composant 74, qui est gravé, dans cet exemple, dans les deux couches 32, 36. Une deuxième couche réfléchissante 86 peut également être déposée sur la face de sortie de ce composant 74. La direction de propagation de la lumière parasite, dans la couche guide 34 est indiquée par la flèche 88. Le coefficient de réflexion sur les couches 84, 86 dépend de la nature de la couche réfléchissante déposée, et de l'épaisseur de cette couche. Une telle couche peut être en or, ou en chrome, ou en platine, ou en aluminium, ou en argent, ou en cuivre, ou en un alliage de ces éléments ; ce peut être également une couche de matériau diélectrique. Une telle couche peut être déposée par pulvérisation sous vide, ou évaporation sous vide.

Les éléments réflecteurs 74, 78, 80, 82 représentés sur la figure 8A sont disposés de manière sensiblement perpendiculaire à l'axe du microguide 72. Un tel mode de réalisation présente un intérêt lorsque l'angle $\alpha_c$ est très grand. Cependant, il est clair que, dans le cadre de la présente invention, les éléments réflecteurs peuvent également avoir toute autre inclinaison possible par rapport à l'axe du microguide 72.

Dans le cas où une couche réflectrice 84 est disposée en entrée du réflecteur 74, tout rayon parasite ayant une direction 77 (figure 8A) quelconque par rapport à la direction du microguide 72 est arrêté par le réflecteur 74. Il est alors possible de mettre, en sortie du microguide 72, un moyen de collection du signal présentant un angle d'acceptance $\alpha_c$ grand.

Un exemple d'application de ce second mode de réalisation de l'invention va être donné, en liaison avec un tricoupleur tel que décrit dans le document FR-2 686 411. La sortie d'un tricoupleur est représentée, en vue de dessus, sur la figure 9. Il comporte essentiellement trois microguides 90, 92, 94 présentant les caractéristiques géométriques et d'espacement décrites dans le document FR-2 686 411. En sortie, chaque microguide 90, 94 est dirigé vers un photodétecteur 96, 98. Sur chacun des côtés du tricoupleur, sont prévus deux réflecteurs 100-1, 100-2, 102-1, 102-2. Entre les extrémités des deux microguides 90, 94, et dans le prolongement du microguide central 92 sont également prévus trois réflecteurs 104-1, 104-2, 104-3. Un dépôt métallique d'aluminium de 2 μm d'épaisseur est réalisé sur chacun des réflecteurs. Le fait de disposer plusieurs réflecteurs les uns derrière les autres permet de pallier un éventuel défaut d'un des réflecteurs réalisés. Cet ensemble de réflecteurs permet d'éliminer en particulier la lumière parasite issue du microguide central 92 du tricoupleur, qui n'est pas intéressante pour le signal à détecter, et remplace avantageusement l'absorbeur décrit dans le document cité ci-dessus pour éliminer la lumière de la voie centrale du tricoupleur.

Quel que soit le mode de réalisation retenu, les réflecteurs selon l'invention peuvent être réalisés par gravure de la structure d'optique intégrée, et ceci par toute technique connue. Un exemple d'une telle technique est la gravure anisotrope (gravure ionique réactive, par exemple avec du $CHF_3$+$O_2$) du substrat constitué par les couches 32, 34, 36 d'indice $n_0$, $n_1$, $n'_1$.

## Revendications

1. Dispositif d'optique intégrée, comportant un microguide optique (34, 38, 44, 72) d'indice no compris entre deux couches d'indice de réfraction respectifs $n_1$ et $n'_1$ (33, 36, 40), tels que $n_1<n_0$ et $n'_1<n_0$, et des moyens de filtrage constitués d'au moins un élément réflecteur (46, 48, 54, 56, 74) disposé sur au moins un côté du microguide, les éléments réflecteurs comportant au moins un élément gravé dans les couches d'indice ni et/ou $n'_1$ et/ou $n_0$.

2. Dispositif d'optique intégrée selon la revendication 1, comportant des éléments réflecteurs disposés de part et d'autre du microguide.

3. Dispositif d'optique intégrée selon l'une des revendications 1 ou 2, au moins une face d'un élément réflecteur (74) étant recouverte d'une couche réfléchissante (84, 86).

4. Dispositif d'optique intégrée selon la revendication 3, la couche réfléchissante (84, 86) étant réalisée en un matériau comportant de l'or, ou du chrome, ou de l'aluminium, ou du platine, ou de l'argent, ou du cuivre, ou comportant un matériau diélectrique.

5. Dispositif d'optique intégrée, selon l'une des revendications 1 à 4, le dispositif comportant au moins deux éléments réflecteurs (74, 78, 80, 82) disposés l'un derrière l'autre.

6. Dispositif d'optique intégrée selon l'une des revendications 1 à 5, l'élément réflecteur (74, 82, 78, 80) étant orienté perpendiculairement à la direction du microguide (72).

7. Dispositif d'optique intégrée selon l'une des revendications 1 à 5, l'élément réflecteur (46, 48, 54, 56) étant incliné par rapport à l'axe du microguide.

8. Dispositif d'optique intégrée selon la revendication 7, comportant en outre un élément de collection de la lumière (50, 106) ayant un angle d'acceptance $\alpha_c$, l'élément réflecteur étant incliné, par rapport à l'axe du microguide, d'un angle

$$\beta < \frac{\pi}{2} - \alpha_C - \mathrm{Arc\,sin}\left(\frac{n_3}{n_2}\right),$$

où $n_3$ est l'indice de l'élément réflecteur et où n2 est l'indice effectif de la structure entourant le microguide.

9. Dispositif selon la revendication 8, l'élément de collection étant une fibre optique ayant un coeur d'indice $n_4$ et un gainage d'indice $n_5$, avec

$$\alpha_C = \mathrm{Arc\,sin}\left(\sqrt{n_4^2 - n_5^2}\right).$$

10. Dispositif selon l'une des revendications 7 à 9, l'élément réflecteur contenant de l'air.

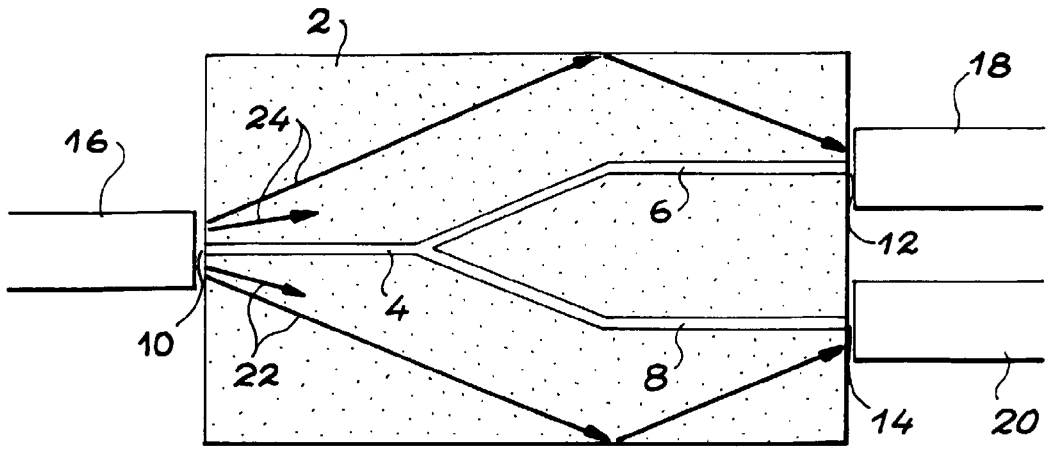


FIG. 1

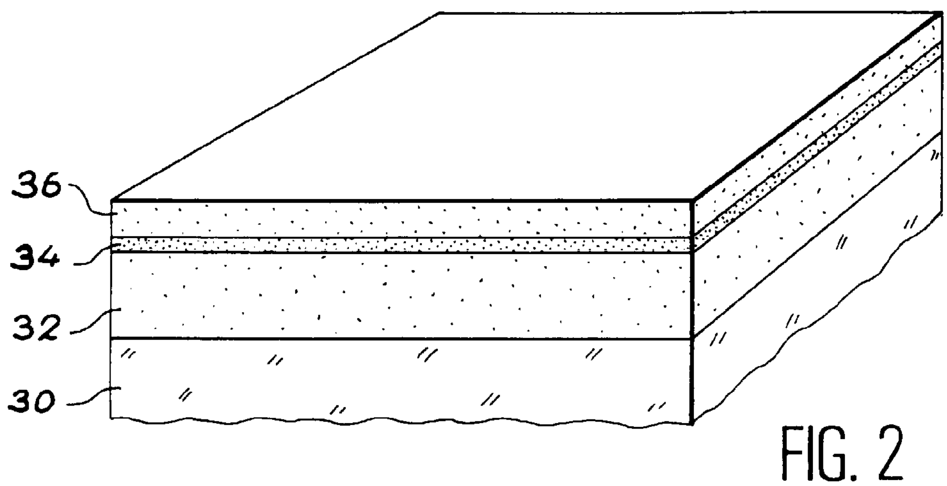


FIG. 2

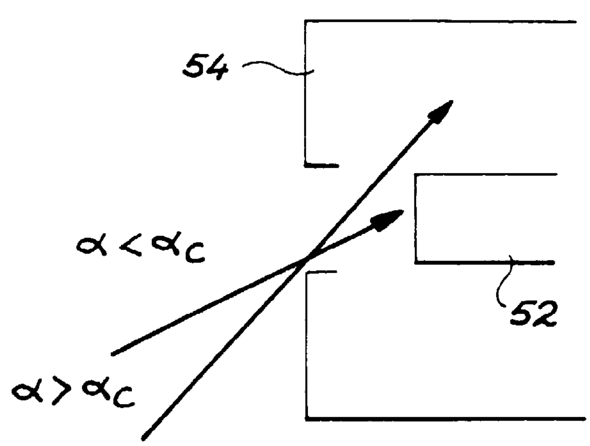


FIG. 5

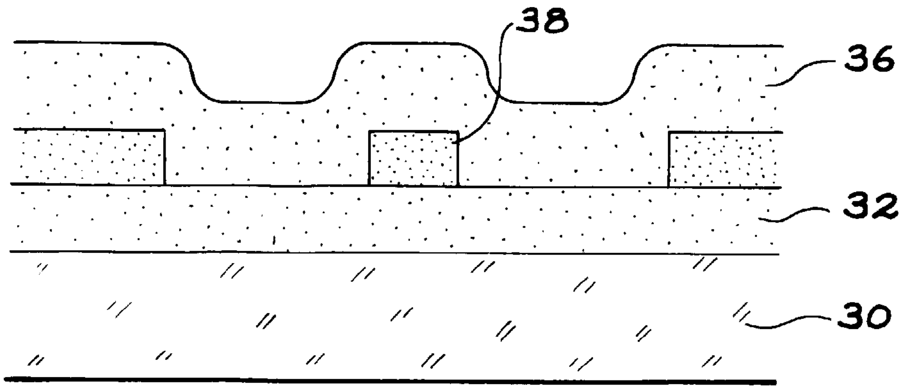


FIG. 3A

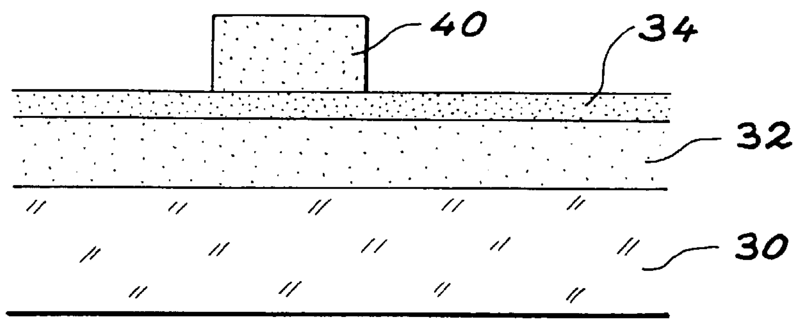


FIG. 3B

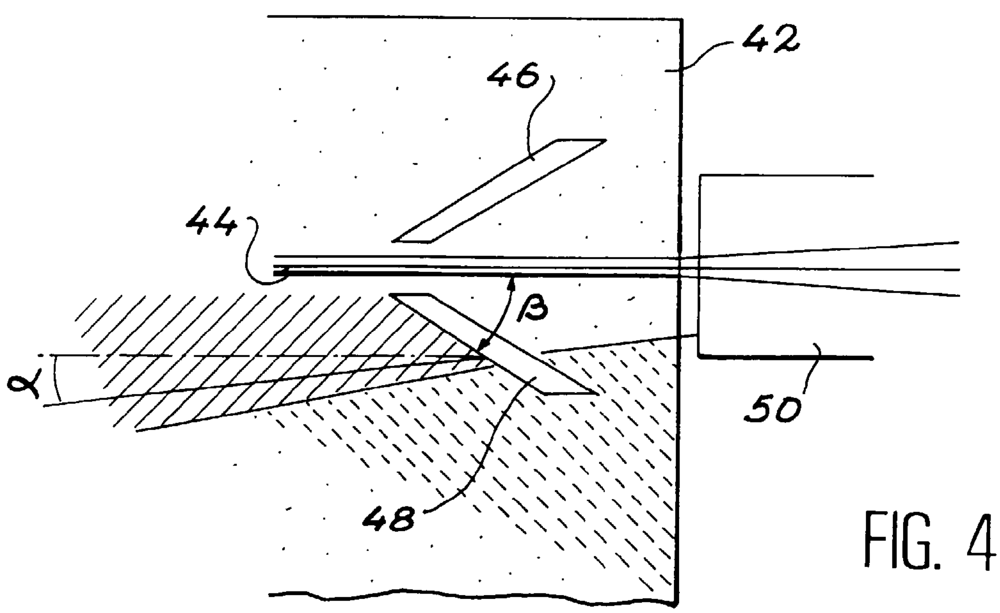


FIG. 4

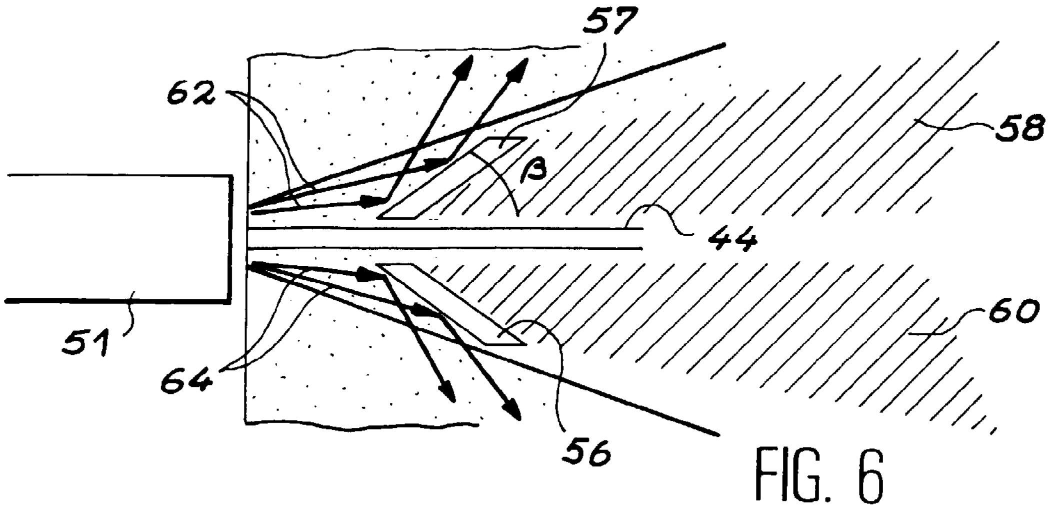


FIG. 6

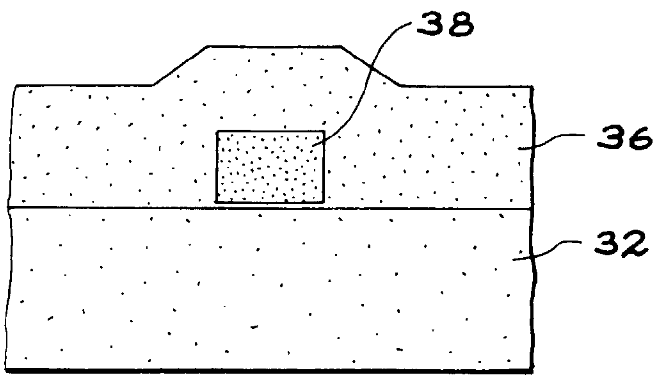


FIG. 7A

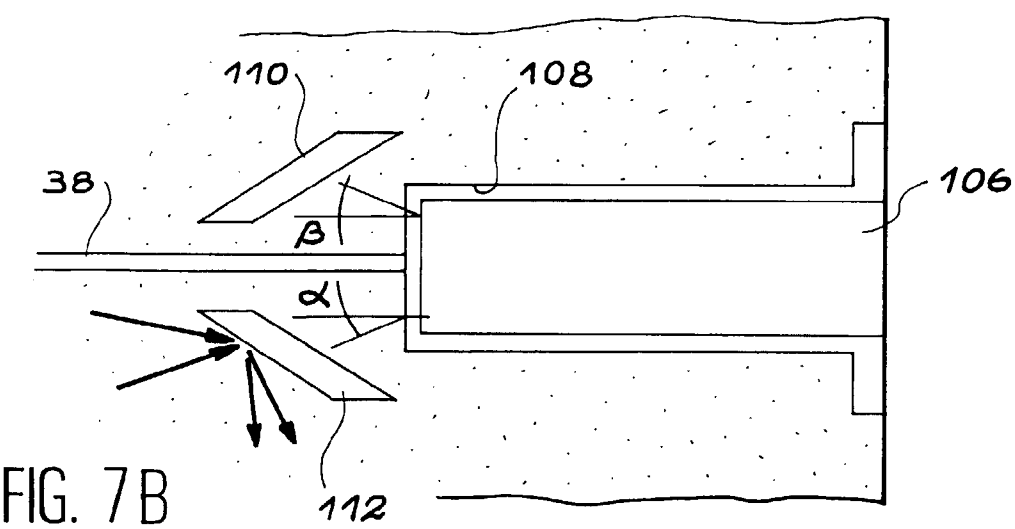


FIG. 7B

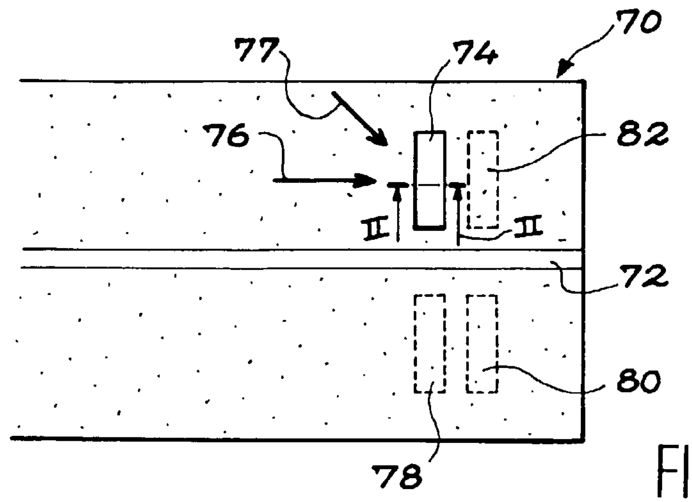


FIG. 8A

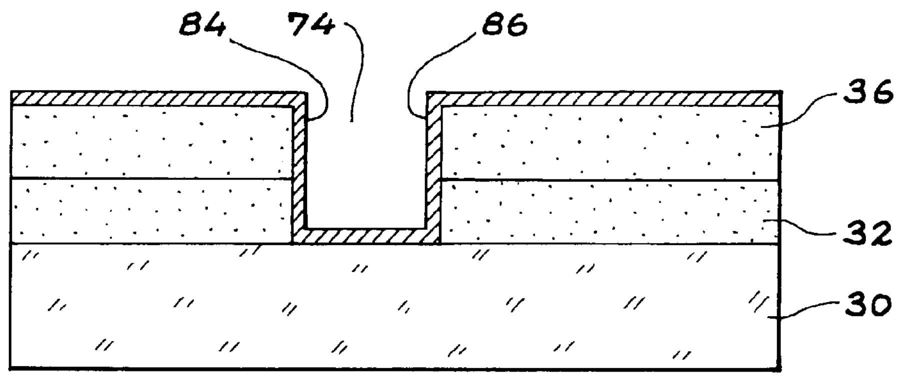


FIG. 8B

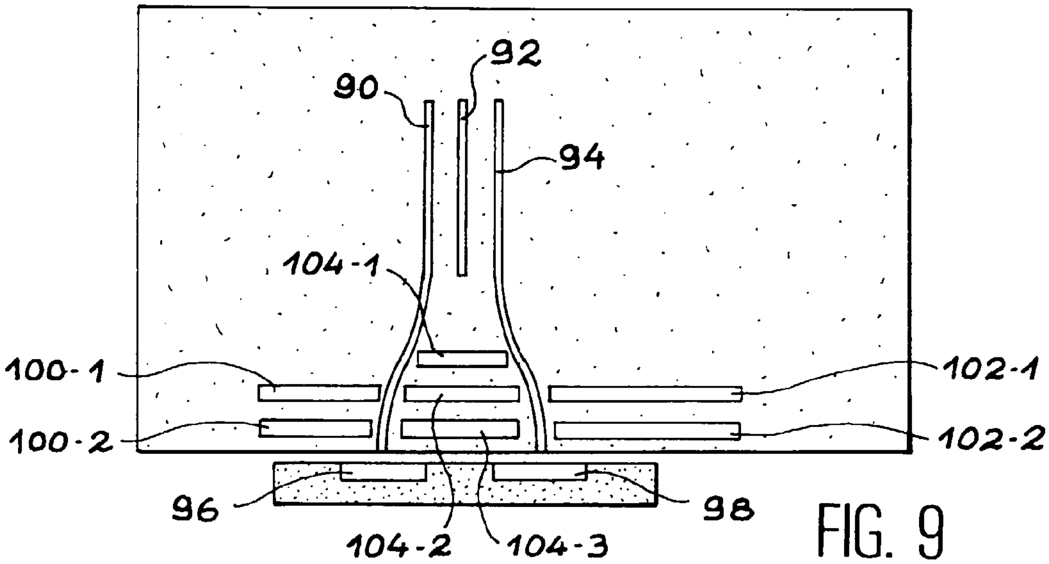


FIG. 9

Office européen des brevets

# RAPPORT DE RECHERCHE EUROPEENNE

Numero de la demande
EP 97 40 1030

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A,D | FR 2 659 148 A (COMMISSARIAT ENERGIE ATOMIQUE) 6 Septembre 1991<br>* page 12, ligne 1 - ligne 20 *<br>* figure 5 * | 1 | G02B6/30<br>G02B6/12 |
| A | PATENT ABSTRACTS OF JAPAN<br>vol. 014, no. 274 (P-1061), 13 Juin 1990<br>& JP 02 081005 A (NEC CORP), 22 Mars 1990,<br>* abrégé * | 1 | |
| A | GB 2 223 860 A (LITTON SYSTEMS INC) 18 Avril 1990<br>* page 5, ligne 17 - page 7, ligne 12 *<br>* figures 4,4A * | 1 | |
| A | US 5 321 779 A (KISSA KARL M) 14 Juin 1994<br>* colonne 3, ligne 56 - colonne 4, ligne 20 *<br>* figure 4 * | 1 | **DOMAINES TECHNIQUES RECHERCHES (Int.Cl.6)** |
| A | EP 0 397 337 A (PLESSEY OVERSEAS) 14 Novembre 1990<br>* colonne 2, ligne 24 - ligne 33 *<br>* figure 2 * | 1 | G02B |
| A | WO 95 34010 A (HONEYWELL INC) 14 Décembre 1995<br>* page 3, ligne 31 - page 4, ligne 19 *<br>* figure 3 * | 1 | |

Le présent rapport a été établi pour toutes les revendications

| Lieu de la recherche | Date d'achèvement de la recherche | Examinateur |
|---|---|---|
| BERLIN | 4 Août 1997 | Luck, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)